Europäisches Patentamt

European Patent Office

Office européen des brevets

(11) Veröffentlichungsnummer: **0 384 919**
**A1**

# (12) EUROPÄISCHE PATENTANMELDUNG

(21) Anmeldenummer: **89103378.9**

(22) Anmeldetag: **27.02.89**

(51) Int. Cl.⁵: **B64C 25/26**

(43) Veröffentlichungstag der Anmeldung:
**05.09.90 Patentblatt 90/36**

(84) Benannte Vertragsstaaten:
**DE FR GB IT**

(71) Anmelder: **Feinmechanische Werke Mainz GmbH**
**Industriestrasse 56-58**
**D-6500 Mainz-Mombach(DE)**

(72) Erfinder: **Kane, Brian**
**Auf der Bein 23**
**D-6501 Budenheim(DE)**
Erfinder: **Laude, Jürgen**
**Eltviller Strasse 15**
**D-6507 Ingelheim(DE)**

(74) Vertreter: **Blumbach Weser Bergen Kramer**
**Zwirner Hoffmann Patentanwälte**
**Sonnenberger Strasse 100**
**D-6200 Wiesbaden 1(DE)**

(54) Greif- und Verriegelungseinrichtung für Flugzeugklappen oder -fahrwerke.

(57) Greif- und Verriegelungseinrichtung für Flugzeugklappen und Fahrwerke mit einem Kolben (4) und einer Kolbenstange (3), die als Sensor für die Schließbewegung der Flugzeugklappe wirken und die Flugzeugklappe selbsttätig aktiv an die zu verschließende Öffnung heranziehen und dort verriegeln. Hierzu dient ein Verriegelungsglied (5), welches eine Anzahl von Verriegelungselementen (6) in eine Verriegelungsstellung bringt und dort hält, bis das hydraulische Drucksignal für das Absenken der Flugzeugklappe eintrifft und das Verriegelungsglied (5) die Riegelelemente (6) in die Freigabestellung steuert, woraufhin der Öldruck am Kolben (4) wirksam werden kann und den Schließhaken (2) öffnet, so daß die Fahrzeugklappe freigegeben wird.

Fig. 1

# Greif- und Verriegelungseinrichtung für Flugzeugklappen oder -fahrwerke

Flugzeugklappen und insbesondere solche, die das eingezogene Fahrwerk abdecken, sind relativ breit und können sich bei der Verschwenkung verwinden, vor allem deshalb, weil der schließende Kolben-Zylinder aus konstruktiven Gründen außermittig von den Flugzeugklappen und üblicherweise an einer Seite dieser Flugzeugklappen angelenkt ist. Es kommt deshalb vor, daß der hydraulische Kolben-Zylinder die Flugzeugklappe einseitig an die abzudeckende Öffnung heranzieht, während an der von dem Kolbenzylinder abgewandten Seite eine Lücke klafft. Da sorgfältiges Schließen bei Flugzeugklappen ein unumgängliches Erfordernis ist, hat man bisher Vorkehrungen getroffen, daß die Klappe, wenn sie sich der zu verschließenden Öffnung annähert, ein Ventil auslöst, durch welches ein hydraulischer Greifer angesteuert wird, der die sich nähernde Klappe erfaßt und vollständig an die zu schließende Öffnung heranzieht, so daß diese sicher verschlossen wird. Die geschlossene Stellung wird alsdann durch einen gesonderten Vorgang verriegelt. Diese bekannten Einrichtungen bedingen einen bestimmten konstruktiven Aufwand, der das Flugzeug verteuert und schwerer macht.

Der Erfindung liegt die Aufgabe zugrunde, eine Greif- und Verriegelungseinrichtung für Flugzeugklappen oder Fahrwerke zu schaffen, die kleiner, leichter und auch billiger hergestellt werden kann, als es bisher bei derartigen Vorrichtungen möglich war.

Die gestellte Aufgabe wird durch die nachfolgende Merkmalskombination gelöst:
·Ein Schließhaken ist mit einer Kolbenstange verbunden und mit dieser in eine untere und obere Position bewegbar;
die Kolbenstange ist an einem Kolben befestigt, der in einem Zylinder eine obere, eine mittlere und eine untere Stellung einnehmen kann und durch Öldruck nach oben oder unten beaufschlagbar ist;
innerhalb des Kolbens ist ein kolbenartiges Verriegelungsglied geführt, welches einen Rückzugraum zur Aufnahme von Riegelelementen in deren zurückgezogener Stellung aufweist;
der Zylinder weist einen Riegelraum zur Aufnahme der Riegelelemente in deren ausgefahrener Stellung auf, die in der oberen Stellung des Kolbens erreichbar ist;
der Kolben nimmt seine untere Stellung in der unteren Position des Schließhakens ein und ist durch Auftreffen der Flugzeugklappe oder des -fahrwerks in die mittlere Stellung anhebbar, in welcher Öldruck auf den Kolben wirksam wird, um diesen in die obere Stellung zu verschieben;
in der oberen Stellung des Kolbens drängt das Verriegelungsglied die Riegelelemente in die Riegelstellung und schafft damit eine sichere Verbindung zwischen Kolben und Zylinder;
bei Beaufschlagung des Verriegelungsgliedes und des Kolbens mit Öldruck in der oberen Stellung des Kolbens sind die Riegelelemente in deren zurückgezogene Stellung bewegbar, so daß der Kolben zur Bewegung nach unten freigegeben wird.

Bei dieser neuartigen Aufgabenlösung wirkt der Kolben als Sensor für die sich annähernden Klappen und dient als Schaltelement, um selbsttätig den Betriebsablauf der Vorrichtung zu steuern. Es genügt deshalb, einen einfachen hydraulischen Steuerbefehl "Öffnen der Klappen" oder "Schließen der Klappen" an die Vorrichtung auszusenden, und die einzelnen Vorgänge, welche zu dem gewünschten Ergebnis führen, laufen automatisch ab, ohne daß es eines gesonderten Steuerventils bedürfte.

Im einzelnen ist vorgesehen, daß Ölanschlußbohrungen in direkter Verbindung zum Druckölanschluß des hydraulischen Antriebs der Flugzeugklappe vorgesehen sind und daß die für Aufwärtsbewegung vorgesehene Ölanschlußbohrung an einer Stelle der Zylinderwand mündet, die in der unteren Stellung des Kolbens abgedeckt und in der mittleren Stellung des Kolbens freigegeben ist.

Der Schließhaken kann Teil eines Fanghebels für die Flugzeugklappe oder das Fahrwerk sein, welcher gerätefest gelagert ist und ein Maul aufweist, das in eine obere Schließstellung und in eine untere Fangstellung schwenkbar ist. Dies stellt eine sichere Konstruktion dar, da die Haltekräfte sich auf zwei Stellen verteilen, nämlich die gerätefeste Lagerung des Fanghebels und die Verriegelung des Kolbens.

Das Verriegelungsglied kann zwei Lagen relativ zum Kolben einnehmen, und zwar eine obere Lage, in welcher die Riegelelemente radial nach außen gedrängt werden, und eine untere Lage, in welcher die Riegelelemente radial nach innen verschoben sind. Das Verriegelungsglied besitzt Nockenflächen, die bei der Verschiebung des Verriegelungsgliedes von der unteren in die obere Lage wirksam werden und die Riegelelemente radial nach außen drängen. Der Zylinder weist Schrägflächen auf, die bei der Verschiebung des Verriegelungsgliedes von der oberen in die untere Lage wirksam werden und die Riegelelemente radial nach innen drängen. Das Verriegelungsglied wird durch eine Feder in die obere Lage vorgespannt, so daß es diese Lage einnimmt, wenn der Kolben seine obere Stellung erreicht und die Riegelelemente in einem seitlichen Raum des Zylinders ausweichen können. Ansonsten verhindert die Zylinderwand die Verschiebung der Riegelelemente und damit des Verriegelungsgliedes in die obere Lage.

Um die Flugzeugklappe im Falle einer Fehlfunktion von Hand öffnen zu können, weist die Kolbenstange eine Längsbohrung auf, welche eine stangenartige Verlängerung des Verriegelungsgliedes aufnimmt, ferner ist eine Querbohrung vorgesehen, welche den Zugang zu der stangenartigen Verlängerung gewährt. Auf diese Weise kann man beispielsweise mit einem Schraubenzieher oder einem anderen Hebel das Verriegelungsglied von Hand in die untere Lage verschieben, wodurch gleichzeitig die Riegelelemente aus ihrer Verriegelungsstellung , d. h. aus den Zylinderwandaussparungen herausgezogen werden und das Gewicht der Flugzeugklappen und des Fahrwerkes dafür sorgt, daß sich die Klappe öffnet.

Eine solche Öffnungsbewegung geht im übrigen nicht schlagartig vor sich, denn es sind Überströmkanäle zwischen dem unteren und oberen Bereich des Zylinders vorgesehen, die durch den wandernden Kolben voneinander getrennt sind und die nur eine langsame Bewegung (mit Stoßdämpfereffekt) zulassen.

Die Erfindung wird anhand der Zeichnung beschrieben. Dabei zeigt:

Fig. 1 die Greif- und Verriegelungseinrichtung in der oberen Stellung,

Fig. 2 eine verkleinerte Darstellung der Vorrichtung in der unteren Stellung und

Fig. 3 in der mittleren Stellung.

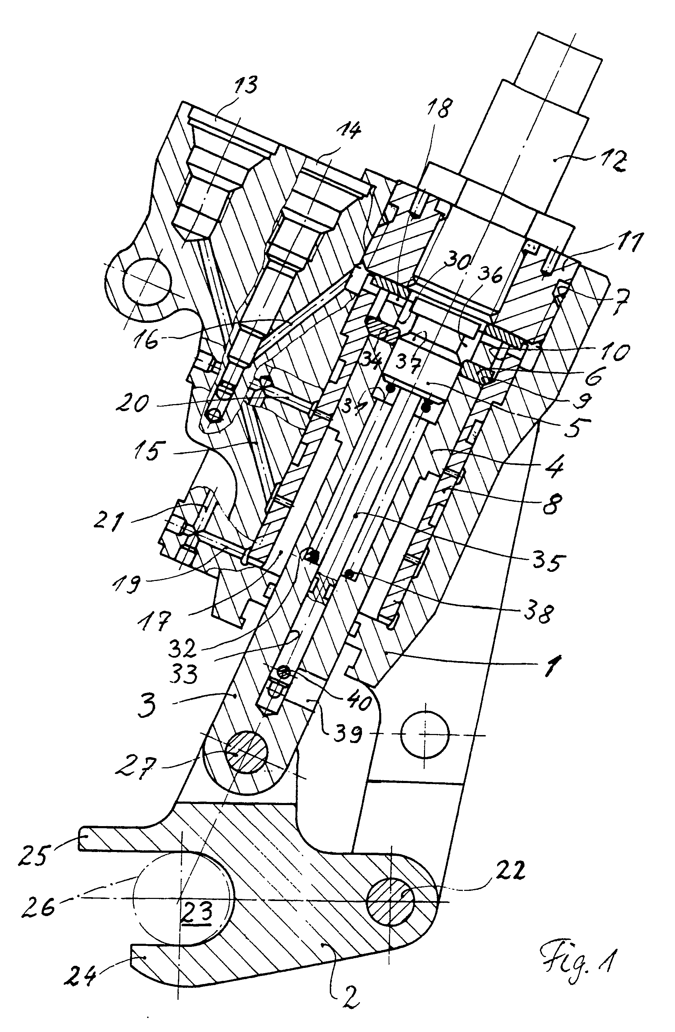

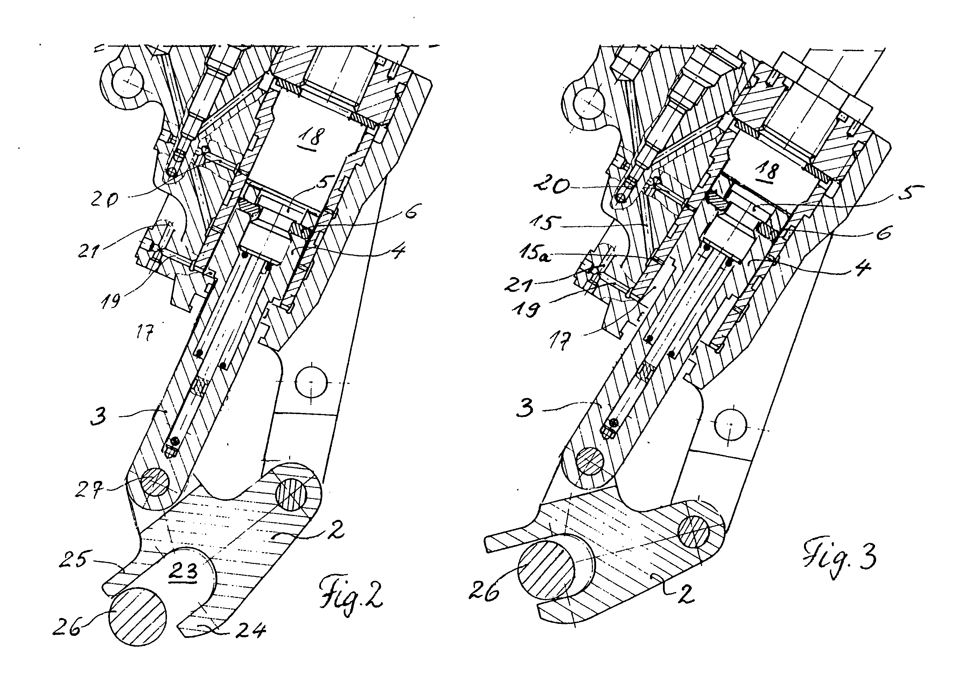

Die hauptsächlichsten Teile der Greif- und Verriegelungseinrichtung sind ein Gerätegehäuse 1, ein Schließhaken 2, eine Kolbenstange 3, ein Kolben 4, ein Verriegelungsglied 5 und Riegelelemente 6. Das Gerätegehäuse 1 besitzt eine Stufenbohrung 7, in welcher eine Zylinderbuchse 8 eingesetzt ist, in deren oberem Bereich Schrägflächen 9 und ein Ausweichraum 10 vorgesehen sind. Die Bohrung 7 wird mittels eines Schraubringes 11 und eines darin eingeschraubten Näherungsschalters 12 geschlossen. Das Gerätegehäuse 1 weist ferner zwei Anschlußbohrungen 13 und 14 für Hydrauliköl auf, die über Kanäle 15 und 16 zum unteren bzw. oberen Bereich der Stufenbohrung 7 und von dort in einen unteren Zylinderraum 17 bzw. einen oberen Zylinderraum 18 führen. Zwischen dem unteren und dem oberen Bereich des Zylinders sind ferner Überströmkanäle vorgesehen, wie bei 19, 20 und 21 angedeutet. Dadurch läßt sich der Kolben 4 aus der unteren Stellung (Fig. 2) in die mittlere Stellung (Fig. 3) anheben, da das aus dem oberen Zylinderraum 18 verdrängte Öl wenigstens teilweise über die Überströmkanäle 19, 20, 21 in den unteren Zylinderraum 17 gelangen kann. Kurz vor Erreichen der mittleren Stellung wird der Kanal 20 durch den Kolben 4 abgesperrt und gleichzeitig oder kruz danach die Öffnung 15a freigegeben. Die Überströmkanäle 19, 20, 21 sind beim Absenken des Kolbens 4 in der ungekehrten Durchströmungsrichtung wirksam.

Der Schließhaken 2 ist an einem Fortsatz des Gerätegehäuses 1 über eine Achse 22 schwenkbar gelagert und weist am freien Ende ein Maul 23 auf, welches durch zwei Wangen 24 und 25 begrenzt wird, wovon die Wange 25 länger ist, um einen sich aufwärts bewegenden Schließbolzen 26 der Klappe oder des Fahrwerkes zu fangen und in das Maul 23 hineinzuleiten, wie am besten aus Fig. 2 ersichtlich ist. Der Schließhaken 2 ist über eine weitere Achse 27 gelenkig mit der Kolbenstange 3 verbunden. Die Achsen 22 und 27 ermöglichen die seitliche Verschiebung des Schließhakens 2 innerhalb gewisser Grenzen. Es können auch mehrere Schließhaken 2 entlang der stangenartigen Achsen 22, 27 angeordnet werden.

Die Kolbenstange 3 und der Kolben 4 sind einstückig zueinander ausgebildet und weisen eine Stufenbohrung 30 auf, welche eine Schulter 31 zur Bewegungsbegrenzung des Verriegelungsgliedes 5, eine weitere Schulter 32 als Federsitz und eine Bohrungsverlängerung 33 aufweist. Von der Stufenbohrung 30 führen radiale Durchbrüche 34 nach außen, in welchen jeweils ein Riegelelement 6 gelagert ist. Das kolbenartige Verriegelungsglied 5 besitzt eine stangenartige Verlängerung 35, die in der Bohrungsverlängerung 33 geführt ist. Am kolbenartigen Verriegelungsglied 5 ist eine Ringnut 36 vorgesehen, welche von einer Nockenfläche 37 begrenzt wird und in welche die Riegelelemente 6 zurückweichen können, wenn die in den Fig. 2 und 3 gezeigte Lage des Verriegelungsgliedes 5 relativ zu dem Kolben 4 gegeben ist. Eine Feder 38 mit einer Kraft von etwa 40 bis 50 Newton stützt sich an der Schulter 32 ab und drängt das Verriegelungsglied 5 nach oben. Im unteren Bereich der Bohrungsverlängerung 33 sind ein Querschlitz 39 in der Kolbenstange 3 und ein Stift 40 in der stangenartigen Verlängerung 35 vorgesehen.

Wenn im Betrieb der Vorrichtung der Schließbolzen 26 gegen die Wange 25 des Schließhakens 2 stößt, wird der Schließbolzen 26 bei der weiteren Aufwärtsbewegung der Flugzeugklappe in das Maul 23 hineingeführt (Fig. 2), woraufhin der weitere Schwung zu einer Schwenkung des Schließhakens 2 führt, wie mit Bezug auf Fig. 3 angedeutet. Die weitere Aufwärtsbewegung der Flugzeugklappe führt dazu, daß die Kolbenstange 3 und damit der Kolben 4 angehoben werden und ihre in Fig. 3 gezeigte, mittlere Stellung einnehmen. Dabei wird der Auslaß 15a des Kanals 15 freigegeben, der zu dieser Zeit unter hydraulischen Druck steht, weil der Anschluß 13 mit dem gleichen hydraulischen Druck verbunden ist, welcher der Kolbenzylindereinheit zum Antrieb der Flugzeugklappe zugeführt worden ist. Der untere Zylinderraum 17 steht somit unter Druck, und der Kolben 4 bewegt sich aktiv nach oben, in Richtung auf die in Fig. 1 dargestellte Schließstellung. Infolge der Wirkung der Feder 38 und der Nockenfläche 37 versucht zwar das Verriegelungsglied 5, die Riegelelemente 6 ständig radial nach außen zu drängen, dies wird aber durch die Zylinderbuchse 8 verhindert. Erst wenn der Ausweichraum 10 erreicht ist, können die Riegelelemente 6 radial ausweichen. Infolgedessen kann das Verriegelungsglied 5 relativ zum Kolben 4 seine obere Lage einnehmen, die in Fig. 1 dargestellt ist. Der Näherungsschalter 12 dient zur Überprüfung des sicheren Erreichens der oberen Lage des Verriegelungsgliedes 5.

In dieser oberen Lage - z. B. während des Fluges -verhindert das Verriegelungsglied 5 ein radiales Zurückweichen der Riegelelemente 6. Wenn demnach starke Zugkräfte über den Schließbolzen 26 auf den Schließhaken 2 und die Kolbenstange 3 sowie den Kolben 4 übertragen werden, dann werden diese über die Wangen der radialen Durchbrüche 34 auf die betreffenden Riegelelemente 6 und von dort über die Schrägflächen 9 auf die Zylinderbuchse 8 übertragen und aufgefangen. Die Riegelelemente 6 liegen großflächig auf den Wangen 34, den Schrägflächen 9 und auf der Oberfläche des Verriegelungsgliedes 5 an, so daß bedeutende Kräfte übertragen und aufgefangen werden können, ohne daß das hydraulische System davon betroffen ist.

Wenn die Flugzeugklappe abgesenkt werden soll, gelangt Drucköl in die Anschlußbohrung 14 und den Kanal 16, in den oberen Zylinderraum 18, das somit auf das kolbenartige Verriegelungsglied 5 einwirkt und dieses in der Zeichnung nach unten bis zur Anlage auf der Schulter 31 verschiebt. Nunmehr liegen die Riegelelemente 6 der Ringnut 36 gegenüber und können in diese zurückweichen, zumal infolge der axialen Verschiebetendenz des Kolbens 4 eine radiale Druckkomponente von den Schrägflächen 9 auf die Riegelelement 6 ausgeübt wird. Der weiterhin einwirkende hydraulische Druck drängt den Kolben 4 nach unten, bis die in Fig. 2 dargestellte Stellung erreicht wird. Hierbei kann der Schließbolzen 26 das Maul 23 verlassen, zumal gleichzeitig mit der Zuführung von Öldruck in den Anschluß 14 auch der Kolbenzylinder zum Herabsenken der Flugzeugklappen beaufschlagt worden ist.

Es ergibt sich somit, daß mit der Beaufschlagung des Kolbenzylinders zur Klappenbewegung gleichzeitig das vorliegende Greif- und Verriegelungsgerät sinnfällig betätigt wird, welches seinen eigenen Betriebsablauf autonom selbst steuert.

Für den Fall des Ausfalls von Hydraulikdruck kann die vorliegende Greif- und Verriegelungseinrichtung von Hand gelöst werden. Hierzu sind der Querschlitz 39 in der Kolbenstange 3 zur Bohrungsverlängerung 33 hin und der Stift 40 oder ein anderes Ansatzmittel vorgesehen, um das Verriegelungsglied 5 in seine untere Lage zu ziehen. In der Praxis wird man einen Schraubenzieher oder dergleichen Hebelgerät zwischen Schlitzrand 39 und Stift 40 ansetzen und durch Schwenken den Stift nach unten drücken. Dadurch werden die Riegelelemente 6 entriegelt, und der Kolben 4 geht infolge des Gewichts der Flugzeugklappe nach unten, wobei sukzessive die Stellungen nach Fig. 3 und 2 erreicht werden. Die Überströmkanäle 19, 20, 21 sind dabei teilweise wirksam, aus dem unteren Zylinderraum 17 verdrängtes Öl in den oberen Zylinderraum 19 zu leiten.

Bezugszeichenliste

1 Gerätegehäuse
2 Schließhaken
3 Kolbenstange
4 Kolben
5 Verriegelungsglied
6 Riegelelemente
7 Stufenbohrung
8 Zylinderbüchse
9 Schrägflächen
10 Ausweichraum
11 Schraubring
12 Näherungsschalter
13, 14 Anschlußbohrungen
15, 16 Kanäle
17 unterer Zylinderraum
18 oberer Zylinderraum
19, 20, 21 Überströmkanäle
22 Achse
23 Maul
24, 25 Wangen
26 Schließbolzen
27 Achse
30 Stufenbohrung
31, 32 Schulter
33 Bohrungsverlängerung
34 radialer Durchbruch
35 stangenartige Verlängerung
36 Ringnut
37 Nockenfläche
38 Feder
39 Querschlitz
40 Stift

**Ansprüche**

1. Greif- und Verriegelungseinrichtung für Flugzeugklappen und -fahrwerke mit folgenden Merkmalen:
ein Schließhaken (2) ist mit einer Kolbenstange (3) verbunden und mit dieser in eine untere und obere Position bewegbar;

die Kolbenstange (3) ist an einem Kolben (4) befestigt, der in einem Zylinder (8) eine obere, eine mittlere und eine untere Stellung einnehmen kann und durch Öldruck nach oben oder unten beaufschlagbar ist;

innerhalb des Kolbens (4) ist ein kolbenartiges Verriegelungsglied (5) geführt, welches einen Rückzugraum (36) zur Aufnahme von Riegelelementen (6) in deren zurückgezogener Stellung aufweist;

der Zylinder (8) weist einen Riegelraum (10) zur Aufnahme der Riegelelemente (6) in deren ausgefahrener Riegelstellung auf, die in der oberen Stellung des Kolbens (4) erreichbar ist;

der Kolben (4) nimmt seine untere Stellung in der unteren Position des Schließhakens (2) ein und ist durch Auftreffen der Flugzeugklappe (26) oder des -fahrwerks in die mittlere Stellung anhebbar, in welcher Öldruck auf den Kolben (4) wirksam wird, um diesen in die obere Stellung zu verschieben;

in der oberen Stellung des Kolbens (4) drängt das Verriegelungsglied (5) die Riegelelemente (6) in die Riegelstellung und schafft damit eine sichere Verbindung zwischen Kolben (4) und Zylinder (8);

bei Beaufschlagung des Verriegelungsgliedes (5) und des Kolbens (4) mit Öldruck in der oberen Stellung des Kolbens sind die Riegelelemente (6) in deren zurückgezogene Stellung bewegbar, so daß der Kolben (4) zur Bewegung nach unten freigegeben wird.

2. Einrichtung nach Anspruch 1,
dadurch gekennzeichnet,
daß Ölanschlußbohrungen (13, 14) in direkter Verbindung zum Drucköianschluß des hydraulischen Antriebs der Flugzeugklappe vorgesehen sind und daß die für Aufwärtsbewegung vorgesehene Ölanschlußbohrung (13) an einer Stelle (15a) der Zylinderwand (8) mündet, die in der unteren Stellung des Kolbens (4) abgedeckt und in der mittleren Stellung des Kolbens (4) freigegeben ist.

3. Einrichtung nach Anspruch 1 oder 2,
dadurch gekennzeichnet,
daß der Schließhaken (2) Teil eines Fanghebels für die Flugzeugklappe (26) oder das -fahrwerk ist, welcher gerätefest gelagert (22) ist und ein Maul (23) aufweist, das in eine obere Schließstellung und eine untere Fangstellung schwenkbar ist.

4. Einrichtung nach einem der Ansprüche 1 bis 3,
dadurch gekennzeichnet,
daß das Verriegelungsglied (5) zwei Lagen relativ zu den Kolben (4) einnehmen kann, und zwar eine obere Lage, in welcher die Riegelelemente (6) radial nach außen gedrängt werden, und eine untere Lage, in welcher die Riegelelemente (6) radial nach innen verschoben sind.

5. Einrichtung nach Anspruch 4,
dadurch gekennzeichnet,

daß das Verriegelungsglied (5) Nockenflächen (37) besitzt, die bei der Verschiebung des Verriegelungsgliedes (5) von der unteren in die obere Lage wirksam werden und die Riegelelemente (6) radial nach außen drängen, und daß der Zylinder (8) Schrägflächen (9) aufweist, die bei der Verschiebung des Verriegelungsgliedes (5) von der oberen in die untere Lage wirksam werden und die Riegelelemente (6) radial nach innen drängen.

6. Einrichtung nach Anspruch 4 oder 5,
dadurch gekennzeichnet,
daß das Verriegelungsglied (5) durch eine Feder (38) in die obere Lage vorgespannt ist.

7. Einrichtung nach einem der Ansprüche 4 bis 6,
dadurch gekennzeichnet,
daß die Kolbenstange (3) eine Längsbohrung (33) welche eine stangenartige Verlängerung (35) des Verriegelungsgliedes (5) aufnimmt, und einen Querschlitz (39) aufweist, der den Zugang zu der stangenartigen Verlängerung (35) gewährt, um das Verriegelungsglied (5) von Hand in die untere Lage zu verschieben.

8. Einrichtung nach einem der Ansprüche 1 bis 7,
dadurch gekennzeichnet,
daß Überströmkanäle (19, 20, 21) zwischen dem unteren und oberen Bereich des Zylinders (18) vorgesehen sind, die durch den Kolben (4) voneinander getrennt sind.

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 265 197 (DOWTY ROTOL LTD) <br> * Ansprüche 1,2,4; Figuren 1,2 * <br> --- | 1,3 | B 64 C 25/26 |
| A | GB-A-2 003 985 <br> (MESSIER-HISPANO-BUGATTI) <br> * Ansprüche 1,3,6,12; Figuren 1,4 * <br> --- | 1,2,5,6 | |
| A | FR-A-2 270 143 <br> (MESSIER-HISPANO-BUGATTI) <br> * Ansprüche 1-5; Figuren 2,3 * <br> --- | 1,2 | |
| A | GB-A- 816 459 (BLACKBURN AND GENERAL AIRCRAFT LTD) <br> * Ansprüche 1-3; Figur 1 * <br> ----- | 1,3 | |

**RECHERCHIERTE SACHGEBIETE (Int. Cl.5)**

B 64 C

Der vorliegende Recherchenbericht wurde für alle Patentansprüche erstellt

| Recherchenort | Abschlußdatum der Recherche | Prüfer |
|---|---|---|
| DEN HAAG | 12-10-1989 | SINGER G.M. |